# Europäisches Patentamt
## European Patent Office
### Office européen des brevets

(19)

(11) Veröffentlichungsnummer: **0 156 860**
**B1**

(12) **EUROPÄISCHE PATENTSCHRIFT**

(45) Veröffentlichungstag der Patentschrift:
**08.06.88**

(21) Anmeldenummer: **84903532.4**

(22) Anmeldetag: **14.09.84**

(86) Internationale Anmeldenummer:
**PCT/DE 84/00192**

(87) Internationale Veröffentlichungsnummer:
**WO 85/01255 (28.03.85 Gazette 85/08)**

(51) Int. Cl.⁴: **B 60 K 20/10**

(54) **VORRICHTUNG ZUR FERNSTEUERUNG EINES SCHALTGETRIEBES FÜR KRAFTFAHRZEUGE MIT EIGEBAUTEN DRUCKLUFTNETZ.**

(30) Priorität: **15.09.83 DE 3333346**

(43) Veröffentlichungstag der Anmeldung:
**09.10.85 Patentblatt 85/41**

(45) Bekanntmachung des Hinweises auf die Patenterteilung:
**08.06.88 Patentblatt 88/23**

(84) Benannte Vertragsstaaten:
**AT BE CH DE FR GB LI LU NL SE**

(56) Entgegenhaltungen:
**EP-A-0 059 853**
**EP-A-0 108 572**
**CH-A-635 278**
**DE-A-3 128 266**
**FR-A-1 432 945**
**FR-A-2 084 302**

(73) Patentinhaber: **GOEDECKE, Wolf- Dieter, Bachweg 12, D-7731 Unterkirnach (DE)**

(72) Erfinder: **KOCH, Siegfried, In Gehren 10, D-7730 Villingen- Schwenningen (DE)**
Erfinder: **ADAMS, Jürgen, Am Mühlweiher 1, D-7730 Villingen- Schwenningen (DE)**
Erfinder: **GOEDECKE, Wolf- Dieter, Bachweg 12, D-7731 Unterkirnach (DE)**

(74) Vertreter: **Witte, Alexander, Dr.- Ing., Schickhardtstrasse 24, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 156 860 B1

## Beschreibung

Die Erfindung betrifft eine Vorrichtung zur Steuerung eines Schaltgetriebes eines Kraftfahrzeugs mit einer Schalthebelkonsole, in der ein Schalthebel in einer Hauptgasse und Nebengassen führbar ist, mit Geberanordnungen zum Erzeugen von eine Position des Schalthebels in der Hauptgasse bzw. einer Nebengasse wiedergebenden Größen, mit einer am Schaltgetriebe angeordneten und zum Gangwechsel in mindestens zwei Koordinaten verstellbaren Gangschaltwelle, mit pneumatischen Stellgliedern zum Betätigen der Gangschaltwelle in Richtung der Koordinaten und mit einer Einrichtung zum Ansteuern der Stellglieder in Abhängigkeit von den Größen.

Eine derartige Vorrichtung ist aus der DE-A-3 128 266 bekannt.

Bei üblichen Kraftfahrzeugen erfolgt das Einlegen der Gänge am Getriebe über mechanische Hebelgetriebe und Gestänge von einem Schalthebel aus in unmittelbarer Nähe des Fahrers. Abhängig von der Anordnung der Fahrerposition zum eigentlichen Schaltgetriebe im Motorraum ist zur Übertragung von Schaltbewegungen ein umfangreiches Schaltgestänge erforderlich, das über eine Vielzahl von Gliedern die Schaltbewegung am sogenannte Gangschalthebel mit hoher Präzision auf die Schaltkulisse am Getriebe übertragen soll. Insbesondere bei schweren Nutzfahrzeugen oder Omnibussen sind mitunter Schaltgestänge über mehrere Meter Entfernung erforderlich. Damit soll gesagt sein, daß neben der Präzision der Übertragung von Schaltwegen über mehrere Glieder auch in Bezug auf die Unterbringung der Schaltgestänge viel Einbauraum zur Verfügung gestellt werden muß. Das Gewicht des Schaltgestänges von der Fahrerposition bis zu einem Getriebe, insbesondere bei Heckmotorbauweisen, ist erheblich und trägt seinen Teil in Bezug auf einen erhöhte Kraftstoffverbrauch bei. Schließlich bedarf eine derartige mechanische Übertragung der Schaltbewegungen einer gefühlvollen, geübten Handhabung des Schalthebels durch den Fahrer, um Schaden vom Schaltgestänge und vom Getriebe fernzuhalten.

Aus der eingangs genannten DE-A-3 128 266 ist eine gestängelose hydraulische Schalteinrichtung für mechanische Wechselgetriebe in Kraftfahrzeugen bekannt.

Bei der bekannten Einrichtung ist der Schalthebel in zwei zueinander senkrechten Koordinatenrichtungen mit hydraulischen Kolben-Zylinder-Einheiten verbunden. Je nach Auslenkung des Schalthebels wird demzufolge in einem Raum auf einer Seite des Kolbens ein erhöhter Druck und auf der jeweils gegenüberliegenden Seite ein verminderter Druck des Hydraulikmediums erzeugt. Von den Räumen beidseits der Kolben der Kolben-Zylinder-Einheiten führen Hydraulikleitungen zur entsprechenden Kolben-Zylinder-Einheiten, die in räumliche Entfernung vom Fahrerhaus unmittelbar an der Gangschaltwelle des Getriebes angeordnet sind und die Gangschaltwelle in den erforderlichen Koordinatenrichtungen bewegen können, um die Gänge im Getriebe einzulegen.

Über diese direkte hydraulische Folgesteuerung hinaus wirken die in den Geber-Kolben-Zylinder-Einheiten am Schalthebel erzeugten hydraulischen Drücke auch als Steuerdrücke für hydraulisch betätigbare Pneumatik-Schaltventile, wobei jeweils eine Ventileinheit für eine der Schaltachsen (entsprechend der Richtung der Hauptgasse bzw. der Nebengassen in der Schaltkulisse) vorgesehen ist. Die Ventileinheit verbindet ein Druckluftsystem des Kraftfahrzeugs mit pneumatischen Kolben-Zylinder-Einheiten an der Gangschaltwelle des Schaltgetriebes. Die Zylinderkolbenstange des pneumatischen Servozylinders ist aber identisch mit der Zylinderkolbenstange der hydraulischen Kolben-Zylinder-Einheit, die bereits erwähnt wurde. Die pneumatischen Servozylinder in den beiden Achsen der Gangschaltwelle haben dabei die Funktion, die Schaltbewegung durch Hilfskraftverstärkung zu unterstützen. In den Ventileinheiten ist jeweils ein Proportionalventil vorgesehen, um den in den hydraulischen Geberzylindern am Schalthebel erzeugten Druck in einen verstärkten, hierzu jedoch proportionalen Druck in den pneumatischen Servozylindern an der Gangschaltwelle des Getriebes zu übersetzen.

Die bekannte Einrichtung löst somit zwar das Problem der räumlichen Trennung von Schalthebel und Schaltgetriebe, in dem es eine hydraulische Fernsteuerung mit pneumatischer Hilfskraftunterstützung vorschlägt, die bekannte Einrichtung hat jedoch den Nachteil, daß das Einlegen der Gänge ohne jede Kontrolle von Seiten des Fahrers erfolgt, weil lediglich eine Folgesteuerung vorgesehen ist, die beim Verschwenken des Schalthebels durch den Fahrer eine Verschwenkung der Gangschaltwelle zur Folge hat, ohne daß sichergestellt ist, daß die Bewegung der Gangschaltwelle so bemessen ist, daß sie einen weichen Gangwechsel gewährleistet. Insbesondere bei Störungen oder Alterungen im Hydraulik- oder Pneumatiksystem muß erwartet werden, daß die Auslenkung der Gangschaltwelle am Schaltgetriebe zu klein oder zu groß ausfällt, wenn der Ganghebel betätigt wird, was zu unsauberen und das Schaltgetriebe beanspruchenden Schaltvorgängen führt. Der Fahrer hat hierauf keinerlei Einfluß, weil er ledigich anhand des vollzogenen Gangwechsels nachträglich feststellen kann, ob dieser weich oder hart ausgeführt wurde. Bei verstelltem Hydraulik- oder Pneumatiksystem hat der Fahrer -schließlich überhaupt keinen Einfluß mehr auf den Gangwechsel, weil er selbst bei korrekter Verstellung des Ganghebels stets harte Schaltvorgänge oder gar Fehlschaltungen erzeugt.

Der Erfindung liegt daher die Aufgabe zugrunde, eine Vorrichtung der eingangs genannten Art dahingehend weiterzubilden, daß auch bei lang dauerndem Einsatz stets präzise Schaltvorgänge vorgenommen werden und daß der Fahrer bereits während der Ausführung des Schaltvorganges durch Betätigen des Ganghebels eine unmittelbare Rückmeldung über den von ihm veranlaßten Schaltvorgang am Getriebe erhält.

Diese Aufgabe wird erfindungsgemäß dadurch gelöst, daß die Gebeanordnungen als erste mechanisch/elektrische Positionsmelder ausgebildet sind, daß die Stellglieder mit zweiten mechanisch/elektrischen Positionsmeldern gekoppelt sind, daß die Einrichtung als elektronischer Regler ausgebildet ist, der aus der Differenz der elektrischen Signale der zweiten Positionsmelder zu den elektrischen Signalen der ersten Positionsmelder Ansteuersignale für die Stellglieder bildet, daß die Stellglieder mittels elektropneumatischer Servoventile angesteuert werden und daß der Schalthebel mit einem in Richtung der Nebengassen wirkenden Arbeitszylinder verbunden ist, der Zurückkopplung des Schaltzustandes des Schaltgetriebes auf den Schalthebel vom elektronischen Regler mit einem die Position der Gangschaltwelle in einer Gangwahlkoordinate wiedergebenden Signal beaufschlagt ist.

Die der Erfindung zugrundeliegende Aufgabe wird auf diese Weise vollkommen gelöst, weil zum einen durch die elektronische Lageregelung der Gangschaltwelle eine präzise Nachführung der Gangschaltwelle zu den Bewegungen des Schalthebels erzeugt wird, unabhängig von möglicherweise auftretenden Alterungserscheinungen im Pneumatiksystem, bei Druckschwankungen, Druckverlust und dgl.. Selbst bei nachlassendem Pneumatikdruck wird nämlich die Gangschaltwelle stets exakt auf die Positionlage geregelt, die vom Fahrer über den Schalthebel vorgegeben wurde. Schließlich erzeugt der Arbeitszylinder eine unmittelbare Rückkopplung für den Fahrer, weil der Schalthebel mechanisch so belastet wird, wie dies der Einlegekraft am Getriebe entspricht. Der Fahrer kann somit trotz Fernsteuerung des Getriebes unmittelbar am Schalthebel "fühlen", mit welcher Kraft er gerade den Gang einlegt, um auf diese Weise in unterschiedlichen Fahrsituationen, insbesondere bei Hoch- oder Rückschaltungen im Last- oder Schubbetrieb in der Ebene oder am Berg einen optimal weichen Gangwechsel zu bewirken. Bei der erfindungsgemäßen Vorrichtung spürt also der Fahrer überhaupt keinen Unterschied zu einer klassischen formschlüssigen Schaltgestängeverbindung zum Getriebe.

Bei der bevorzugten Ausgestaltung der Erfindung bestehen die pneumatischen Stellglieder aus zwei mittel Servoventilen steuerbaren Zylindern mit vorstehenden Kolbenstangen und sie sind als Stellantrieb in einem Block vorgefertigt und auf das Schaltgetriebe aufflanschbar und unmittelbar mit der Gangschaltwelle verbindbar.

Diese Maßnahme hat den Vorteil, daß ein besonders kompakter Aufbau entsteht, bei dem die Stellglieder sogar in das Getriebe integriert sein können, was zu einer Gewichtsersparnis und einer Montagevereinfachung führt.

Bei einer weiteren Ausgestaltung der Erfindung sind die Positionsmelder als Drehpotentiometer ausgebildet, die entsprechend einem Verfahrweg von Zylinderkolbenstangen der Stellglieder bzw. einem Verfahrweg des Schalthebels die elektrischen Signale an den elektronischen Regler liefern.

Diese Maßnahme haben den Vorteil, daß in besonders einfacher und robuster Weise elektrische Signale erzeugt werden können, die repräsentativ für die Position der Zylinderkolbenstangen bzw. des Schalthebels sind.

Bei einer weiteren Ausgestaltung der Erfindung weisen die Zylinderkolbenstangen eine Zahnung auf, die in Eingriff mit einem Zahnrad steht, das verdrehfest auf einer Welle des Drehpotentiometers angeordnet ist.

Diese Maßnahmen haben den Vorteil, daß die Längsbewegung der Zylinderkolbenstange in besonders einfacher und robuster Form in eine Drehbewegung umgewandelt wird, die zum Betätigen der Drehpotentiometer erforderlich ist.

Eine besonders gute Wirkung wird erzielt, wenn die Schalthebelkonsole in einem Lager verschwenkbaren Gehäuse untergebracht ist, welches gleichzeitig der Aufnahme des elektronischen Reglers dient.

Diese Maßnahmen haben den Vorteil, daß die Schalthebelkonsole in praktisch beliebiger Einbaulage im Fahrerhaus angebracht werden kann, so daß im Fahrerhaus ein erheblicher Freiraum entsteht, und zwar an der Stelle, an der sonst der übliche Gangschalthebel untergebracht ist, der aus Gründen der unmittelbaren mechanischen Betätigung des Getriebes auch besonders groß ausgebildet war, während nach der Erfindung der Schalthebel auch als kleiner kardanisch aufgehängter Hebel ausgebildet sein kann. Die Integration des elektronischen Reglers in das Gehäuse des Schalthebels hat den Vorteil, daß Verdrahtungsaufwand gespart wird und das Teil gesamthaft zu Montage- oder Wartungszwecken aus-und eingebaut werden kann.

Weitere Vorteile ergeben sich aus der Beschreibung und der beigefügten Zeichnung.

Ein Ausführungsbeispiel der Erfindung ist in der Zeichnung dargestellt und wird in der nachfolgenden Beschreibung näher erläutert.

Es zeigen:

Fig. 1 ein Blockschaltbild der Getriebefernsteuerung mit im Fahrerhaus angeordneter Schalthebelkonsole einschließlich einer Steuerungselektronik und einer entfernt im Motorraum vorgesehenen Schaltkulisse,

Fig. 2 eine Seitenansicht der Schalthebelkonsole mit Positionsmeldeschaltern und einem Arbeitszylinder zur Rückkopplung der Getriebeschaltzustände auf den Schalthebel,

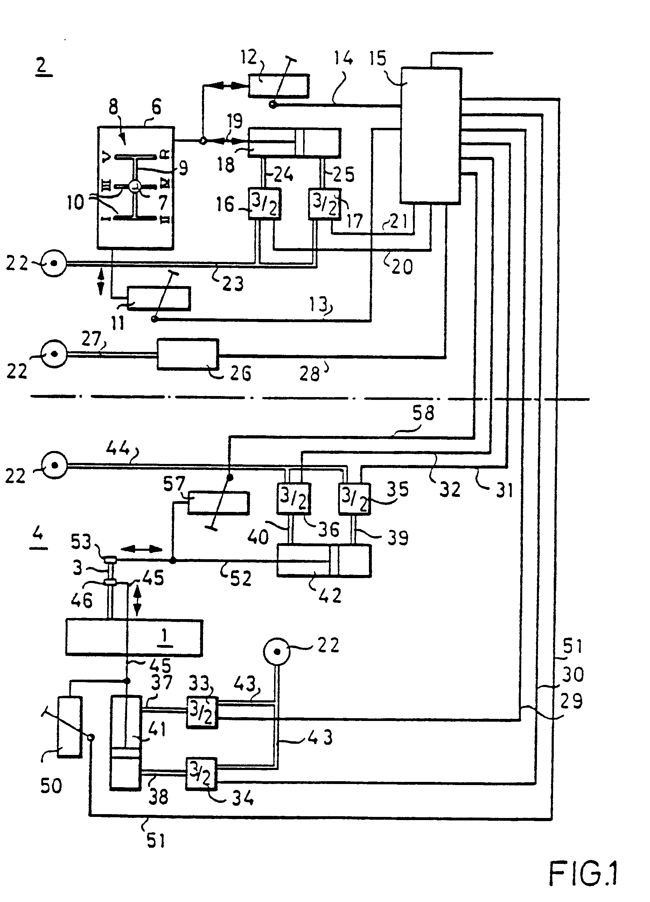

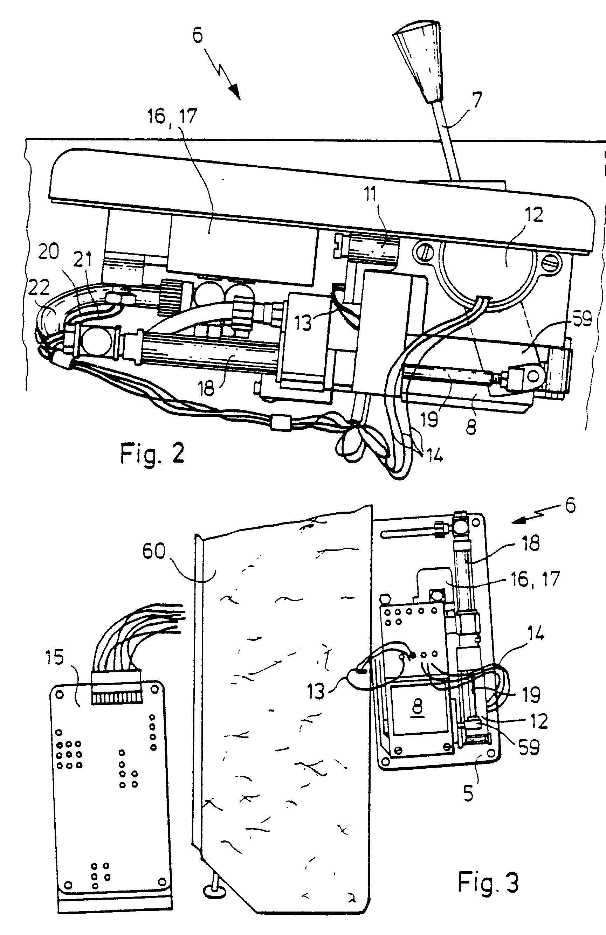

Fig. 2/1 desgleichen in photographischer Darstellung,

Fig. 3 eine Ansicht einer Anordnung zur Unterbringung der Schalthebelkonsole und der Steuerungselektronik in einem lageverschwenkbaren Gehäuse,

Fig. 3/1 desgleichen in photographischer Darstellung,

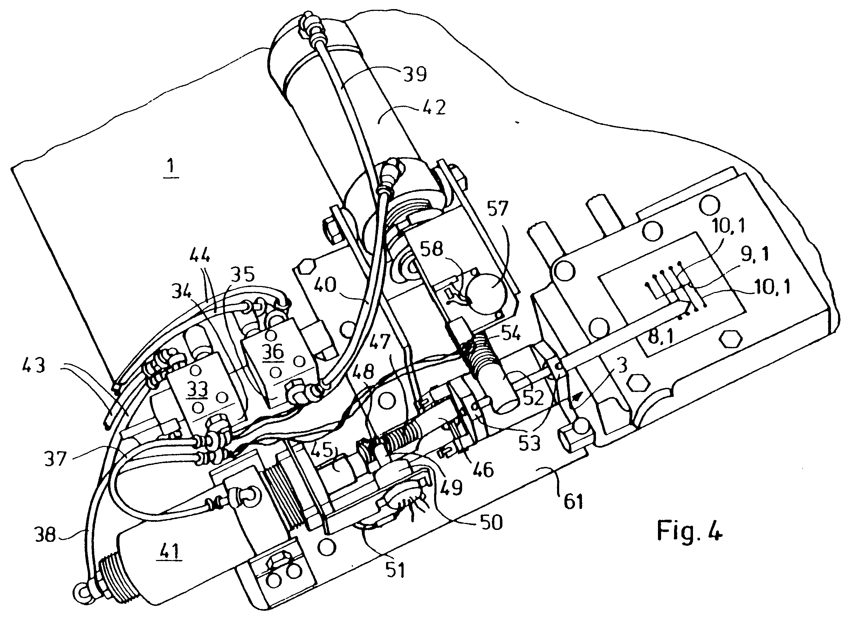

Fig. 4 eine Draufsicht auf die Anordnung einer servopneumatisch steuerbaren Schaltkulisse direkt am Getriebe,

Fig. 4/1 desgleichen in photographischer Darstellung,

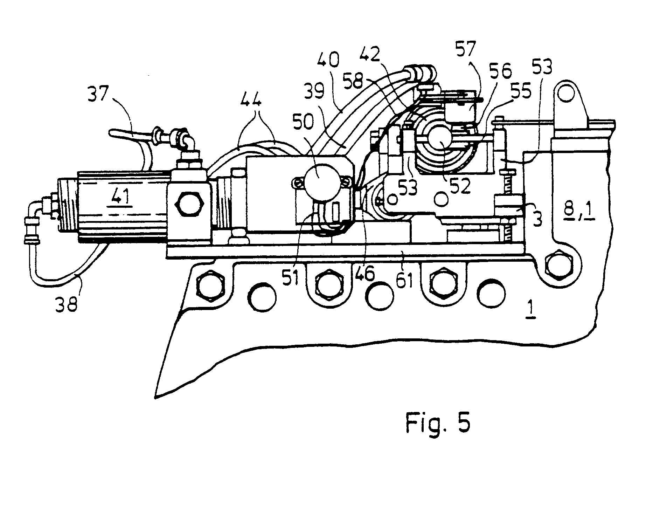

Fig. 5 eine Seitenansicht der Anordnung einer servopneumatisch steuerbaren Schaltkulisse am Getriebe,

Fig. 5/1 desgleichen in photographischer Darstellung.

In FIG. 1 ist in einem Blockschaltbild schematisiert eine Vorrichtung zur Fernsteuerung eines Schaltgetriebes 1 für ein Kraftfahrzeug mit eingebautem Druckluftnetz angegeben. Der gesamte Aufwand ist aufgeteilt in Vorrichtungen, die im Fahrerhaus 2 im Bereich des Fahrers untergebracht sind, und den von dort aus steuerbaren Aggregaten zur Betätigung einer Gangschaltwelle 3 unmittelbar am entfernt gelegenen Getriebe 1 im Motorraum 4. Im Fahrerhaus 2 ist in möglichst optimaler Bedienlage zusammengefaßt in einem Gehäuse 5 eine Schalthebelkonsole 6 vorgesehen. Ein Schalthebel 7 ist kardanisch aufgehängt und läßt sich entsprechend der Anzahl und Anordnung der schaltbaren Gänge durch eine Kulissenführung 8 entlang einer so bezeichneten Hauptgasse 9 (Leerlauf) und rechtwinklig hierzu auf Nebengassen 10 (Gangwahl) in die einzelnen Gangschaltpositionen einstellen. Die Schaltwege des Schalthebels 7 werden auf Positionsmeldeschalter 11, 12 über mechanische Verbindungen übertragen. Gemäß dem Blockschaltbild nach FIG. 1 werden die Verfahrwege des Schalthebels 7 entlang der Hauptgasse oder des Leerlaufs repräsentiert durch den Positionsmeldeschalter 11, während die Verfahrwege entlang der Nebengasse 10 zur Gangwahl repräsentiert werden durch den Positionsmeldeschalter 12. Die in der Funktionsweise eines Drehpotentiometers wirksamen Positionsmeldeschalter 11, 12 sind über Leitungen 13, 14 mit einer zentralen Steuerungselektronik 15 verbunden. In der Schalthebelkonsole 6 ist, wie aus FIG. 1 hervorgeht, außerdem ein doppelseitig wirksamer, mittels zweier Servoventile 16, 17 steuerbarer Arbeitszylinder 18 vorgesehen, der über eine Zylinderkolbenstange 19 mit dem Schalthebel 7 in Verbindung steht und eine Rückkopplungsbewegung in Verfahrrichtung der Gangwahl ausführt. Zu diesem Zweck sind die elektropneumatischen Servoventile 16, 17 über Leitungen 20, 21 mit der zentralen Steuerungselektronik 15 verbunden, von der sie eine vom aktuellen Schaltzustand am Getriebe 1 abhängige und entsprechend aufbereitete Signalkette empfangen. Mit Druckluft versorgt werden die Servo-Ventile 16, 17 und der Arbeitszylinder 18 aus einem symbolisch dargestellten, serienmäßig im LKW vorhandenen Druckluftnetz 22 über die Druckluftleitung 23 und die Druckluftsteuerleitungen 24, 25. Zur Regelung des Vorrats an Druckluft ist ein Druckschalter 26 vorgesehen, der einerseits über eine Druckluftleitung 27 an das Druckluftnetz 22 und andererseits über eine Signalleitung 28 mit der Steuerungselektronik 15 verbunden ist.

Die vom Schalthebel 7 über die Positionsmeldeschalter 11, 12 an die Steuerungselektronik 15 gegebenen Schaltkommandos werden in der Steuerungselektronik 15 umgesetzt und als Signalkette über Leitungen 29, 30 und 31, 32 an sog. 3/2 Wege Servo-Ventile 33, 34 und 35, 36 im Motorraum 4 übertragen. Die Servo-Ventile 33, 34 sind über eine Druckluftleitung 43, die Servo-Ventile 35, 36 über eine Druckluftleitung 44 zur Versorgung an das Druckluftnetz 22 angeschlossen. Von den Servo-Ventilen 33, 34 und 35, 36 führen Druckluftsteuerleitungen 37, 38 und 39, 40 an doppelseitig wirksame Arbeitszylinder 41 und 42.

Eine aus dem Arbeitszylinder 41 herausgeführte Zylinderkolbenstange 45 ist über einen Gelenkkopf 46 mit der aus dem Getriebe 1 herausragenden Gang-Schaltwelle 3 gekoppelt (siehe auch FIG. 4 und 5). Die Hubbewegungen der Zylinderkolbenstange 45 dienen der Auswahl bzw. Einstellung der Hauptgasse 9/1 am Schaltgetriebe 1 auf die vom Schalthebel 7 über die Steuerungselektronik 15 gewählte Position. Ein dabei ausgeführter Verfahrweg in axialer Richtung der Gangschaltwelle 3 wird über eine Zahnung 47 auf der Zylinderkolbenstange 45 auf ein Zahnrad 48, das verdrehfest auf einer Einstellwelle 49 eines Positionsmeldeschalters 50 befestigt ist, übertragen. Im gezeigten Ausführungsbeispiel nach FIG. 4 ist als Positionsmeldeschalter 50 ein Drehpotentiometer eingesetzt. Abhängig von der Hubbewegung der Zylinderkolbenstange 45 wird somit von dem Positionsmeldeschalter 50 der Verfahrweg gemessen und über eine Leitung 51 an die Steuerungselektronik 15 zurückgemeldet und mit der Position des Schalthebels 7 verglichen.

Eine aus dem Arbeitszylinder 42 herausgeführte Zylinderkolbenstange 52 ist rechtwinklig und in der Höhe versetzt zur Gangschaltwelle 3 am Getriebe 1 angeordnet und mit verdrehfest mit der Gangschaltwelle 3 verbundenen Schwenkarmen 53 gelenkig verbunden, derart daß die Hubbewegungen der Zylinderkolbenstange 52 über die Schwenkarme 53 eine Drehbewegung auf die Gangschaltwelle 3 ausüben. Auch auf der Zylinderkolbenstange 52 ist eine Zahnung 54 vorgesehen, die den Verfahrweg über ein Zahnrad 55, eine Einstellwelle 56 auf einen weiteren Positionsmeldeschalter 57, ebenfalls lt. FIG. 4 und 5 ein Drehpotentiometer, überträgt. Der vom Positionsmeldeschalter 57 gemessene Wert ist repräsentativ für die Verdrehung der Gangschaltwelle 3, d. h. durch den Arbeitszylinder 42 werden die Wege der Nebengasse 10/1 durchfahren bzw. die Gänge geschaltet. Die vom Positionsmeldeschalter 57 ausgehende Signalkette wird gleichfalls über eine Leitung 58 an die zentrale Steuerungselektronik 15 zurückgemeldet. Bei den Verfahrwegen in die einzelnen Gänge oder Nebengassen 10/1 am Getriebe durch die Kraftwirkung des Arbeitszylinders 42 tritt die Schaltmechanik in eine Phase der Synchronisation ein. Dieser Zustand wird permanent an die Steuerungselektronik 15 zurückgemeldet, die ihrerseits die Kraft-Wegverhältnisse am Schaltgetriebe 1 über eine Regelfunktion über die Leitungen 20, 21 und den kleinen Arbeitszylinder 18 auf den Schalthebel 7 rückkoppelt. Es ist damit möglich, über eine genau dosierte Anpreßkraft den Gang zu synchronisieren und einzulegen und den Schaltzustand und die Schaltposition am Schaltgetriebe 1 für den Fahrer am Schalthebel 7 kontrollierbar rückzukoppeln.

In FIG. 2 sind die Einzelheiten der Schalthebelkonsole 6 dargestellt. Der Schalthebel 7 ist über eine Art Kugelgelenk kardanisch aufgehängt und wird mit dem über das Gelenk hinaus verlängerten Schalthebel 7 in einer Kulissenführung 8 geführt. Die Betätigung des Schalthebels 7 entlang der vorgegebenen Verfahrwege, die bekanntlich in einer Ebene und im rechten Winkel zueinander verlaufen, wird beispielsweise über eine Welle 59 als Drehwinkelbewegung auf einen Positionsmeldeschalter 11, 12, gemäß dem gezeigten Ausführungsbeispiel nach FIG. 2 und 3 auf einen Drehpotentiometer, übertragen. Um den Fahrer beim Einlegen der Gänge eine Kontrollmöglichkeit in bezug auf die tatsächliche Position der Gangschaltung am entfernt gelegenen Schaltgetriebe 1 zu vermitteln, ist eine Rückkopplung der Verfahrwege und Kraftzustände vom Schaltgetriebe 1 auf den Schalthebel 7 vorgesehen. Hierzu ist in der Schalthebelkonsole 6 ein doppelseitig wirksamer Arbeitszylinder 18 vorgesehen, dessen Zylinderkolbenstange 19 über einen Hebelarm 59 direkt mit dem Schalthebel 7 in getrieblicher Verbindung steht. Der Arbeitszylinder 18 wird durch zwei Servo-Ventile 16, 17 gesteuert, die über Leitungen 20, 21 mit einer Signalkette aus der zentralen Steuerungselektronik 15 beaufschlagt werden. Es ist so eine fein dosierbare Rückkopplung der Kraft-Wegverhältnisse am Schaltgetriebe erzielbar. Insbesondere in bezug auf die Linearbewegung in Richtung der Gangwahl ist eine Rückkopplung von großer Bedeutung, da es dabei gilt, die Phase der Synchronisation mit einem passend dosierbaren Anpreßdruck anzufahren und beim Erreichen der Synchronisation schließlich den Gang weich, d. h. mit verringerter Anpreßkraft, einzulegen.

Für eine Regelung dieser Abläufe mit hinreichend großer Präzision ist zwischen der Schaltkulisse 8/1 am Schaltgetriebe 1 und der Schalthebelkonsole 6 im Fahrerhaus 2 die Steuerungselektronik 15 vorgesehen. Die Steuerungselektronik 15 dient einerseits der Aufnahme und Umsetzung der Schaltkommandos von Seiten des Schalthebels 7 aus dem Fahrerhaus 2 an die servo-pneumatisch steuerbare Schaltkulisse 8/1 am Getriebe 1 im entfernt gelegenen Motorraum 4, und andererseits zur signalgesteuerten Rückkopplung des Schaltzustandes am Getriebe 1 auf den Arbeitszylinder 18 und schließlich den Schalthebel 7.

Die Steuerungselektronik 15 läßt sich zusammen mit der Schalthebelkonsole 6 in einem bevorzugten Ausführungsbeispiel nach FIG. 3 in einem lageverschwenkbaren Gehäuse 60 unterbringen, so daß eine optimale Bedienlage für den Fahrer oder aber auch für den Service gewährleistet ist. Dies ist nur dadurch möglich geworden, daß alle Verbindungen zwischen den Einzelheiten lediglich aus elektrischen und pneumatischen Leitungen bestehen, die sich unproblematisch und raumsparend unterbringen lassen.

Gemäß der Anordnung eines Ausführungsbeispieles nach FIG. 4 und 5 kann die servo-pneumatisch steuerbare Schaltkulisse 8/1, bestehend aus zwei mit Servo-Ventilen 33, 34, 35, 36 steuerbaren Arbeitszylindern 41, 42 mit vorstehenden Kolbenstangen 45, 52 als Stellantriebe in einem Block 61, beispielsweise auf einer Montageplatte, vorgefertigt und auf ein Getriebe der herkömmlichen Art angeflanscht werden. In einer konstruktiven Weiterbildung ist es denkbar und sinnvoll, die servopneumatischen Antriebskomponenten in die mechanische Schaltkulisse einzubeziehen bzw. in den Getriebeblock 1 zu integrieren.

**Patentansprüche**

1. Vorrichtung zur Steuerung eines Schaltgetriebes (1) eines Kraftfahrzeugs mit einer Schalthebelkonsole (6), in der ein Schalthebel (7) in einer Hauptgasse (9) und Nebengassen (10) führbar ist, mit Geberanordnungen (11, 12) zum Erzeugen von eine Position des Schalthebels (7) in der Hauptgasse (9) bzw. einer Nebengasse (10) wiedergebenden Größen, mit einer am Schaltgetriebe (1) angeordneten und zum Gangwechsel in mindestens zwei Koordinaten verstellbaren Gangschaltwelle (3), mit pneumatischen Stellgliedern (41, 42) zum Betätigen der Gangschaltwelle (3) in Richtung der Koordinaten und mit einer Einrichtung zum Ansteuern der Stellglieder (41, 42) in Abhängigkeit von den Größen, dadurch gekennzeichnet, daß die Geberanordnungen als erste mechanisch/elektrische Positionsmelder (11, 12) ausgebildet sind, daß die Stellglieder (41, 42) mit zweiten mechanisch/elektrischen Positionsmeldern (50, 57) gekoppelt sind, daß die Einrichtung als elektronischer Regler ausgebildet ist, der aus der Differenz der elektrischen Signale der zweiten Positionsmelder (50, 57) zu den elektrischen Signalen der ersten Positionsmelder (11 , 12) Ansteuersignale für die Stellglieder (41, 42) bildet, daß die Stellglieder (41, 42) mittels elektropneumatischer Servoventile (33 bis 36) angesteuert werden und daß der Schalthebel (7) mit einem in Richtung der Nebengassen (10) wirkenden Arbeitszylinder (18) verbunden ist, der zur Rückkopplung des Schaltzustandes des Schaltgetriebes (1) auf den Schalthebel (7) vom elektronischen Regler mit einem die Position der Gangschaltwelle (3) in einer Gangwahlkoordinate wiedergebenden Signal beaufschlagt ist.

2. Vorrichtung nach Anspruch 1, dadurch gekennzeichnet, daß die pneumatischen Stellglieder, bestehend aus zwei mittels den Servoventilen (33 bis 36) steuerbaren Arbeitszylindern (41, 42) mit vorstehenden Zylinderkolbenstangen (45, 52) als Stellantrieb in einem Block vorgefertigt sind und auf das Schaltgetriebe (1) aufflanschbar und unmittelbar mit der Gangschaltwelle (3) verbindbar sind.

3. Vorrichtung nach Anspruch 1 oder 2, dadurch gekennzeichnet, daß die Positionsmelder (11, 12, 50, 57) als Drehpotentiometer ausgebildet sind, die entsprechend einem Verfahrweg von Zylinderkolbenstangen (45, 52) der Sellglieder (41, 42) bzw. einem Verfahrweg des Schalthebels (7) die elektrischen Signale an den elektronischen Regler liefern.

4. Vorrichtung nach Anspruch 3, dadurch gekennzeichnet, daß die Zylinderkolbenstangen (45, 52) eine Zahnung (47, 54) aufweisen, die in Eingriff mit einem Zahnrad (48, 55) steht, das verdrehfest auf einer Welle des Drehpotentiometers angeordnet ist.

5. Vorrichtung nach einem der Ansprüche bis 4, dadurch gekennzeichnet, daß die Schalthebelkonsole (6) in einem Lager verschwenkbaren Gehäuse (60) untergebracht ist, welches gleichzeitig der Aufnahme des elektronischen Reglers dient.

6. Vorrichtung nach einem der Ansprüche 1 bis 5, dadurch gekennzeichnet, daß der Arbeitszylinder (18) in der Schalthebelkonsole (6) über eine Zylinderkolbenstange (19) und einem Kurbelarm direkt mit dem Schalthebel (7) zusammenwirkt.

**Claims**

1. Device for controlling a shift gear (1) of a motor vehicle, with a shift-lever console (6) in which a shift lever (7) can be guided in a main slot (9) and secondary slots (10), with transmitter arrangements (11, 12) for generating quantities reproducing a position of the shift lever (7) in the main slot (9) or a secondary slot (10), with a gear-shift shaft (3) arranged on the shift gear (1) and adjustable in at least two coordinates for the gear change, with pneumatic actuating members (41, 42) for actuating the gear-shift shaft (3) in the direction of the coordinates, and with a means for activating the actuating members (41, 42) as a function of the quantities, characterized in that the transmitter arrangements are designed as first mechanical/electrical position indicators (11, 12), in that the actuating members (41, 42) are coupled to second mechanical/electrical position indicators (50, 57), in that the means is designed as an electronic controller which forms activation signals for the actuating members (41, 42) from the difference between the electrical signals from the second position indicators (50, 57) and the electrical signals from the first position indicators (11, 12), in that the actuating members (41, 42) are activated by means of electropneumatic servo-valves (33 to 36), and in that the shift lever (7) is connected to a working cylinder (18) which acts in the direction of the secondary slots (10) and which, for the feedback of the shifting state of the shift gear (1) to the shift lever (7), receives from the electronic controller a signal representing the position of the gear-shift shaft (3) in one gear-selection coordinate.

2. Device according to Claim 1, characterized in that the pneumatic actuating members consisting of two working cylinders (41, 42) controllable by means of the servo-valves (33 to 36) and having projecting cylinder piston rods (45, 52) are prefabricated as an actuating drive in a block and can be flanged onto the shift gear (1) and connected directly to the gear-shift shaft (3).

3. Device according to Claim 1 or 2, characterized in that the position indicators (11, 12, 50, 57) are designed as rotary potentiometers which supply electrical signals to the electronic controller according to a travel of cylinder piston rods (45, 52) of the actuating members (41, 42) or a travel of the shift lever (7).

4. Device according to Claim 3, characterized in that the cylinder piston rods (45, 52) have a toothing (47, 54) engaged with a gear wheel (48, 55) which is arranged fixedly in terms of relative rotation on a shaft of the rotary potentiometer.

5. Device according to one of Claims (sic) to 4, characterized in that the shift-lever console (6) is accommodated in a bearing (sic) pivotable housing (60) which at the same time serves for receiving the electronic controller.

6. Device according to one of Claims 1 to 5, characterized in that the working cylinder (18) interacts directly with the shift lever (7), in the shift-lever console (6), via a cylinder piston rod (19) and a crank arm.

## Revendications

1. Dispositif de commande d'un changement de vitesse (1) d'un véhicule automobile avec une grille de levier de changement de vitesse (6), dans laquelle un levier de changement de vitesse (7) peut se déplacer dans une fente principale (9) et des fentes secondaires (10), avec des systèmes de transmission de signaux (11, 12) pour produire des grandeurs de signaux reproduisant une position du levier de changement de vitesse (7) dans la fente principale (9) ou dans les fentes secondaires (10), avec un axe de changement de vitesse (3) disposé sur le changement de vitesse (1) et pouvant se déplacer, lors du changement des vitesses, dans au moins deux directions de coordonnées, avec des vérins pneumatiques (41, 42) pour actionner l'axe de changement de vitesse (3) dans les directions de coordonnées et avec un dispositif de commande de vérins (41, 42) en fonction des grandeurs de signaux, caractérisé en ce que les systèmes de transmission de signaux sont sous forme de premiers détecteurs mécaniques/électroniques de position, que les vérins (41, 42) sont couplés avec les seconds détecteurs mécaniques/électroniques de position (50, 57), que le dispositif de commande est un régulateur électronique qui forme, à partir de la différence des signaux électriques des seconds détecteurs de position (50, 57) par rapport à ceux des premiers détecteurs de position (11, 12), des signaux de commande pour les vérins (41, 42), que les vérins (41, 42) sont commandés au moyen de servo soupapes électropneumatiques (33 à 36) et que le levier de vitesse (7) est relié à un cylindre moteur (18) agissant dans la direction des fentes secondaires (10), qui, pour la rétroaction sur les vitesses du changement de vitesse (1) est relié au levier de changement de vitesse (7) par le régulateur électronique avec un signal reproduisant la position de l'axe de changement de vitesse (3) dans une coordonnée de sélection de vitesse.

2. Dispositif selon la revendication 1, caractérisé en ce que les vérins pneumatiques, composés de deux cylindres moteurs (41, 42) commandés par les servo soupapes (33 à 37), avec les tiges de piston cylindrique dépassant (45, 52) sont préfabriqués sous forme d'un servo moteur monobloc et peuvent être reliés sur le changement de vitesse (1) latéralement et directement à l'axe de changement de vitesse (3).

3. Dispositif selon la revendication 1 ou 2, caractérisé en ce que les détecteurs de position (11, 12, 51, 57) sont des potentiomètres rotatifs, qui fournissent, selon un trajet des tiges de piston cylindriques (45, 52) des vérins (41, 42) ou un trajet du levier de vitesse (7), les signaux électriques aux régulateurs électroniques.

4. Dispositif selon la revendication 3, caractérisé en ce que les tiges de piston cylindriques (45, 52) présentent une denture (47, 54), qui est en prise avec une roue dentée (48, 55), qui est disposée fixe sur un axe du potentiomètre rotatif.

5. Dispositif selon l'une des revendications 1 à 4, caractérisé en ce que la grille de levier de vitesse (6) est logée dans un boîtier (60) basculable, qui sert en même temps pour le logement du régulateur électronique.

6. Dispositif selon l'une des revendications 1 à 5, caractérisé en ce que le cylindre moteur (18) coopère dans la grille de levier de vitesse (6), par l'intermédiaire d'une tige de piston cylindrique (19) et une manivelle, directement avec le levier de vitesse (7).

FIG.1

Fig. 2

Fig. 3

Fig. 4

Fig. 5